# EUROPÄISCHE PATENTSCHRIFT

(11) **EP 1 423 818 B1**
(45) Veröffentlichungstag und Bekanntmachung des Hinweises auf die Patenterteilung: **16.08.2006**
(21) Anmeldenummer: 02767463.9
(22) Anmeldetag: 31.08.2002
(51) Int. Cl.: G06K 7/00

(54) **LESEGERÄT FÜR UNTERSCHIEDLICHE KARTENTYPEN**
READING DEVICE FOR DIFFERENT TYPES OF CARDS
LECTEUR POUR DIFFERENTS TYPES DE CARTES

(30) Priorität: 04.09.2001 DE 10143309
(43) Veröffentlichungstag der Anmeldung: 02.06.2004
(73) Patentinhaber: Grundig Multimedia B.V., 1083HJ Amsterdam (NL)
(72) Erfinder: KÖRBER, Matthias, 90765 Fürth (DE); SLAWIK, Ralf, 90482 Nürnberg (DE); WOLFF, Uwe, 90482 Nürnberg (DE)
(74) Vertreter: Pröll, Jürgen
(86) Internationale Anmeldenummer: PCT/EP2002/009753
(87) Internationale Veröffentlichungsnummer: WO 2003/021522

(56) Entgegenhaltungen:
- EP-A- 0 706 291
- EP-A- 0 923 042
- DE-A- 19 817 297
- US-A- 4 709 136
- US-A- 5 396 617
- US-A- 6 137 710

## Beschreibung

Die Erfindung betrifft ein Lesegerät für Kartentypen unterschiedlicher Baugröße. Solche Lesegeräte lassen sich beispielsweise in Autoradios integrieren, die neben dem eigentlichen Rundfunkempfang dem mobilen Telefonieren und/oder der Navigation oder zu sonstigen Funktionen dienen.

Nach dem Stand der Technik werden bei Mobiltelefonen SIM-Karten (Subscriber Identification Modul) als Nutzerkennung eingesetzt. Der zugeordnete Leser weist einen der Baugröße der SIM-Karte angepassten Schacht auf. Eine Druck/Druck (Push/Push)-Funktion zur Verriegelung und Entriegelung der SIM-Karte im Schacht ist problematisch, weil die SIM-Karte dann nur etwa 2 mm aus der Öffnung des Schachtes vorsteht und damit schwer zu hantieren ist.

Weiterhin sind SD-Karten als Speichermedium bekannt. Sie eignen sich zum Speichem von Musik, beispielsweise im MP3-Format, von Fahrtenbuchdaten und/oder Navigationsdaten. Die Bedienung mit Datenabruf oder Dateneingabe kann über Tasten, Drehknöpfe oder Mehrfachfunktionen von bei einem Autoradio vorgesehenen Bedienelementen erfolgen.

Ein Leser für eine SD-Karte weist einen Schacht auf, in den die SD-Karte nur lagerichtig einsteckbar ist, was durch eine entsprechende Gestaltung der am Schacht vorgesehenen Führungen und der Ränder der SD-Karte erreicht ist. Es ist hier eine Druck/Druck-Funktion zum Verriegeln und Entriegeln der SD-Karte im zugeordneten Leser für den Nutzer unproblematisch.

Die Karten des ersten Kartentyps, insbesondere SIM-Karten, sind in ihrer Baugröße kleiner als die Karten des zweiten Kartentyps, insbesondere SD-Karten. Entsprechend unterschiedlich breit und gegebenenfalls unterschiedlich hoch sind auch die Öffnungsschlitze der Leser.

In Kraftfahrzeugen, insbesondere in Autoradios integriert, sollen zur Kommunikation, Information oder Unterhaltung die beiden genannten Kartentypen oder ähnliche Kartentypen verwendet werden können. Hierfür zwei separate Lesegeräte vorzusehen, ist aus Platzgründen und aus Designgründen ungünstig. Außerdem besteht die Gefahr, dass der Nutzer versehentlich die SIM-Karte, die kleiner ist als die SD-Karte, in den Schacht des SD-Lesers steckt, wo sie dann verschwindet.

In der DE 43 36 511 C2 ist eine Katelese-/Schreibvorrichtung zum gemeinsamen Verwenden von berührungslosen Karten und berührt werdenden Karten beschrieben. Die Karten dienen der Zugangskontrolle und werden durch das Lesegerät gefördert.

Aus US-4,709,136-A ist ein EC-Kartenlesegerät mit zwei gleichen Leseeinheiten bekannt, wobei die Leseeinheiten jeweils nur einen Kartentyp und beide Leseeinheiten eben nur den selben Kartentyp aufnehmen können.

Aus EP-0 706 291 ist ein EC-Karteniesegerät mit zwei identischen Leseeinheiten offenbart. Beide Leseeinheiten können nur einen und nur den selben Kartentyp aufnehmen. Ein EC-Kartenlesegerät ist im Weiteren offenbart, wobei beide Lesegeräte nur Kartentypen unterschiedlicher Größe aufnehmen können.

Aus DE-198 17 297-A1 ist eine Trägerkarte zur Aufnahme einer Chipkarte offenbart.

Aus EP-0 923 042-A1 ist ein EC-Kartenlesegerät mit einer Leseeinheit offenbart, welches einen Verriegelungsmechanismus aufweist.

Aus US-6,137,710-A1 ist ein Kartenlesegerät mit zwei übereinander angeordneten unterschiedlichen Leseeinheiten offenbart.

Aus US-5,396,671 ist ein EC-Kartenlesegerät mit einer Leseeinheit und einem Laufwerk für ein rotierendes Speichermedium bekannt.

In der DE 199 25 076 A1 ist ein Doppel-SIM-Kartenleser beschrieben. Das Lesen von Karten anderer Baugröße ist nicht vorgesehen.

Aus der DE 195 16 987 A1 und der DE 199 30 389 A1 sind Kartelesevorrichtungen für Chipkarten und/oder SIM-Karten mit unterschiedlicher Dicke bekannt. Die zu erkennenden Karten weisen, abgesehen von der Dicke, gleiche Baugrößen auf.

In der Veröffentlichung MID 2000 Molded Interconnect Devices, 4.International Congress, 27.-28. September 2000, Erlangen, Germany, ISBN 3-87525-135-0, ist beschrieben, dass sich durch die MID-Technik räumlich strukturierte Schaltungen herstellen lassen, wobei auf ein als Träger dienendes, räumlich gestaltetes Kunststoffteil Leiterbahnen aufgeprägt werden.

Aufgabe der Erfindung ist es, ein Lesegerät der eingangs genannten Art vorzuschlagen, das so aufgebaut ist, dass beide oder mehrere Kartentypen wahlweise genutzt werden können.

Erfindungsgemäß ist obige Aufgabe durch die Merkmale des Anspruchs 1 gelöst. In jeden der gleichen Schächte kann der Kartentyp größerer Baugröße (SD-Karte) und der Kartentyp kleinerer Baugröße (SIM-Karte) wahlweise eingesteckt werden. Dabei wird der Kartentyp größerer Baugröße direkt - ohne Adapter - in einen der Schächte eingeschoben und der andere Kartentyp kleinerer Baugröße wird in dem Adapter gehalten in einen der Schächte eingeschoben. Da in jedem der Schächte Leser für den einen und den anderen Kartentyp angeordnet sind, können die verschiedenen Kartentypen in jedem der Schächte ausgewertet werden. Der Nutzer muss also nicht darauf achten, welcher Schacht welchem Kartentyp zugeordnet ist. Er kommt zum gleichen Funktionsergebnis unabhängig davon, ob er die jeweilige Karte in den einen oder den anderen Schacht steckt.

Da beide Schächte gleich sind, sind auch ihre Öffnungsschlitze gleich, was ein klares Design des Lesegeräts ermöglicht.

Vorzugsweise ist das Lesegerät so ausgelegt, dass die Karte größerer Baugröße eine SD-Karte ist und dass die Karte kleinerer Baugröße eine SIM-Karte ist.

Vorzugsweise sind die Schächte derart gestaltet, dass ein Verriegeln und Entriegeln der Karte größerer Baugröße und des die Karte kleinerer Baugröße tragenden Adapters durch eine Druck/Druck-Funktion (Push/Push) erfolgt. Es ist damit erreicht, dass auch die Karten kleinerer Baugröße, getragen vom Adapter, sich in Druck/Druck-Funktion einfach verriegeln und entriegeln lassen.

Weitere vorteilhafte Ausgestaltungen der Erfindung ergeben sich aus den Unteransprüchen und der folgenden Beschreibung eines Ausführungsbeispiels.

In der Zeichnung zeigen:
Figur 1 eine perspektivische Ansicht eines Lesegeräts, wobei bei dem einen Schacht eine SD-Karte oder ein Adapter teilweise eingeschoben dargestellt ist,
Figur 2 eine gegenüber Fig. 1 vergrößerte Teilansicht des linken Schachts,
Figur 3 eine gegenüber Fig. 1 vergrößerte Teilansicht des rechten Schachts,
Figur 4 eine SD-Karte und
Figur 5 einen Adapter für eine SIM-Karte.

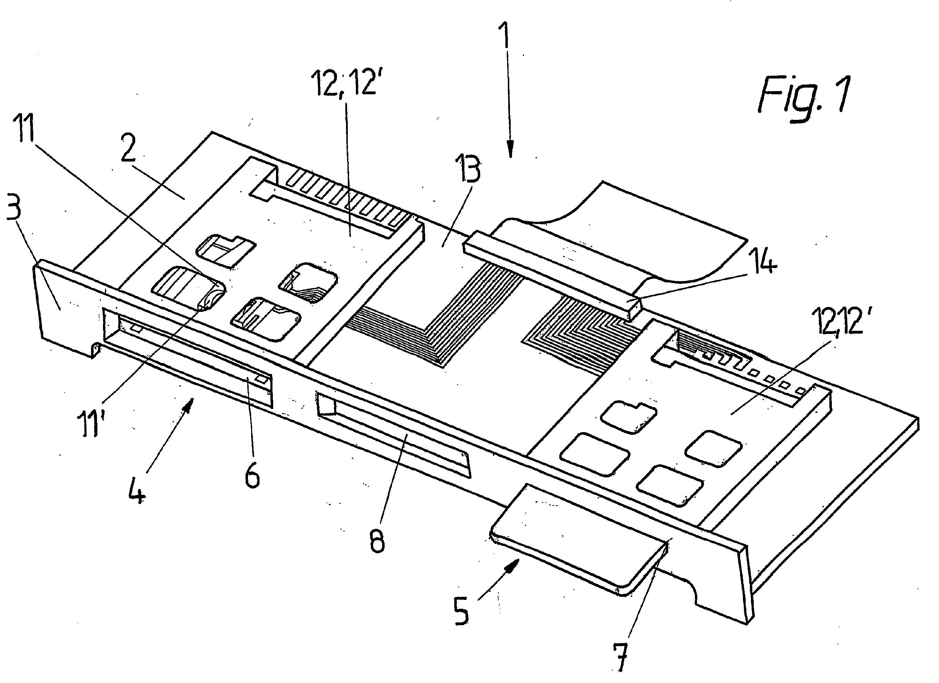

Ein Lesegerät 1, das sich in Verbindung mit einem Autoradio zum Einbau in ein Kraftfahrzeug eignet, weist einen Grundträger 2 mit Blendleiste 3 (vgl. Fig. 1) auf, die Teil einer Blende des Autoradios sein kann.

Am Lesegerät 1 sind ein linker Schacht 4 und ein rechter Schacht 5 vorgesehen. Beide Schächte 4,5 sind gleich aufgebaut. Jedem der Schächte 4,5 ist ein Schlitz 6,7 der Blendleiste 3 zugeordnet. Zwischen den Schlitzen 6,7 ist ein Feld 8 vorgesehen, in dem ein Lichtsensor zur Steuerung der Beleuchtungshelligkeit des Autoradios und/oder eine Infrarot-Schnittstelle angeordnet sein kann.

Jeder der beiden Schächte 4,5 weist einen rechten Führungsrand 9 und einen linken Führungsrand 10 auf. An jedem der beiden Schächte 4,5 ist an der einen Seite ein Leser 11 für einen Kartentyp kleiner Baugröße, insbesondere SIM-Karte, und an der anderen Seite ein Leser 12 für einen Kartentyp größerer Baugröße, insbesondere SD-Karte, angeordnet. In den Figuren 1 bis 3 sind die gegebenenfalls eingeschobene SIM-Karte kontaktierende Kontaktelemente 11' des Lesers 11 zu sehen. Vom Leser 12 ist in den Figuren 1 bis 3 nur die Basisplatte 12' dargestellt; zur Zeichnungsvereinfachung sind die SD-Karte abtastende Elemente nicht gezeichnet. Sie wirken durch eine oder mehrere Öffnungen 12" der Basisplatte 12' bei dem jeweiligen Schacht 4,5.

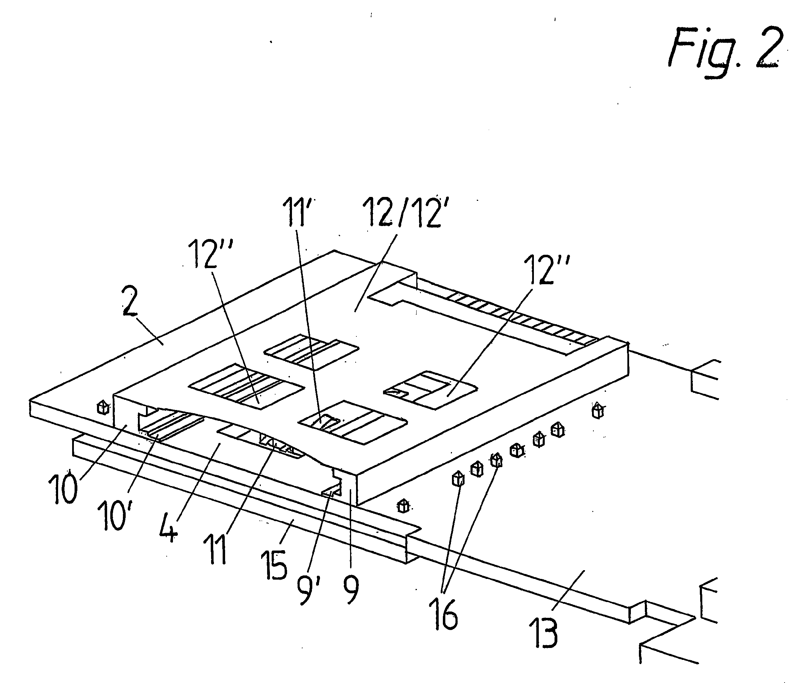

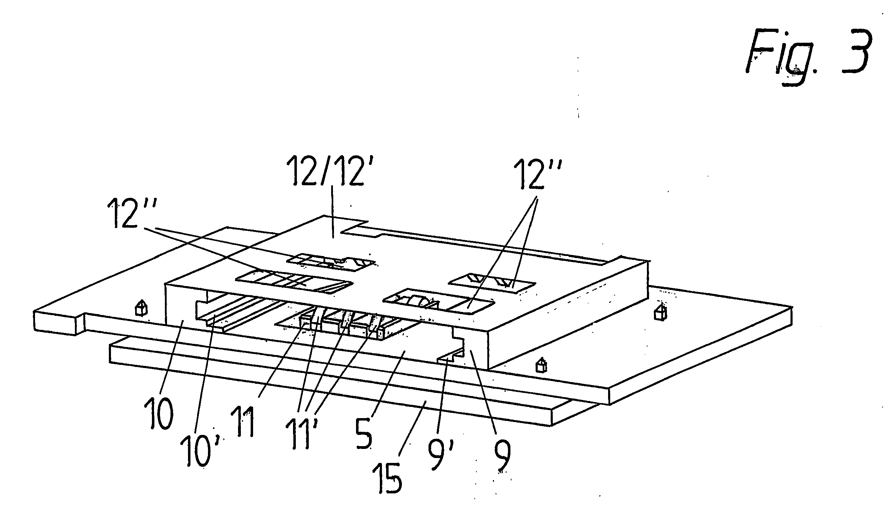

Nach den Figuren 2 und 3 weist der Grundträger 2 eine erste Leiterplatte 13 mit einer gemeinsamen Anschlussleiste 14 auf. Mit der Leiterplatte 13 ist der Leser 12 kontaktiert. An der Leiterplatte 13 sind in einer weiteren Leiterplattenebene Leiterplatten 15 angeordnet, die jeweils den dem Schacht 4 bzw. 5 zugeordneten Leser 11 für die SIM-Karte tragen. Kontaktstifte 16 verbinden die Leiterplatten 15 mit der Leiterplatte 13. Es ist jedoch auch möglich, den Grundträger 2 in MID-Technik aufzubauen. Dabei ist der Grundträger 2 ein räumliches geformtes Kunststoffbauteil, das zwei Leiterplattenebenen bildet, die die zwei dem Schacht 4 zugeordneten Leser 11,12 und die zwei dem Schacht 5 zugeordneten Leser 11,12 tragen.Die Leser 11,12 sind im wesentlichen Kontaktelemente, die die jeweilige Karte kontaktieren und elektrisch mit der Anschlussleiste 14 verbunden sind.

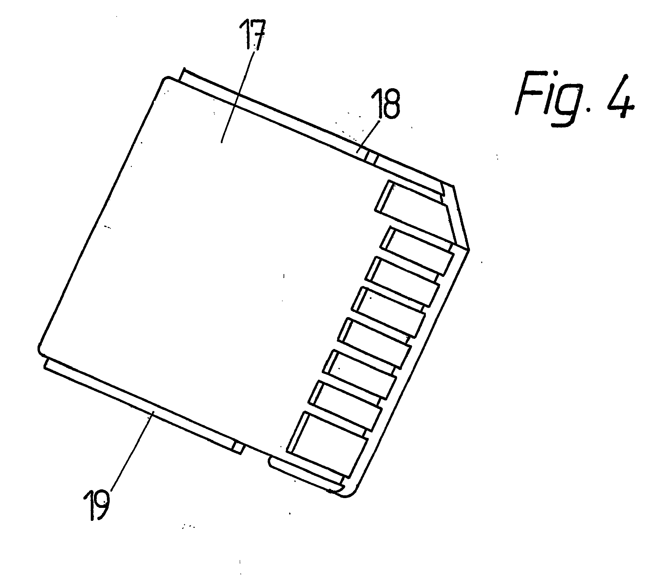

Die Schächte 4,5 sind so gestaltet, dass in sie eine an sich bekannte SD-Karte 17 (vgl.. Fig. 4) und der unten beschriebene Adapter 20 in Druck/Druck-Funktion (Push/Push) einschiebbar, in ihnen verriegelbar und entriegelbar und aus ihnen entnehmbar ist.

Die SD-Karte 17 weist an ihren Außenrändem 18,19 ein gestuftes Profil auf. Eine entsprechende Stufung 9',10' ist an den Führungsrändem 9,10 der Schächte 4,5 gestaltet. Dadurch ist sichergestellt, dass die SD-Karte 17 nur in der richtigen Lage in den einen oder den anderen Schacht 4,5 derart eingeschoben werden kann, dass sie auf den ihr zugeordneten Leser 12 wirkt.

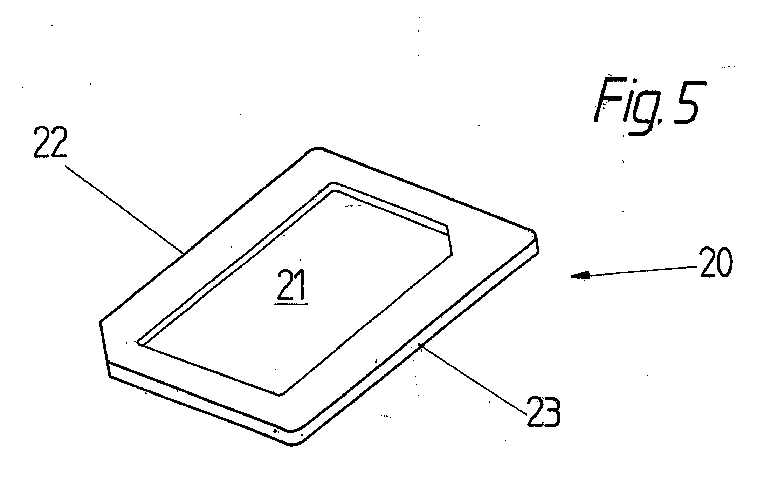

Ein Adapter 20 (vgl. Fig. 5) ist zur Aufnahme einer SIM-Karte vorgesehen. Hierfür weist der Adapter 20 eine Aussparung 21 auf, deren Innenform der Außenform der SIM-Karte derart angepasst ist, dass eine SIM-Karte nur in einer richtigen Lage in den Adapter 20 eingesetzt werden kann.

Die Außenform des Adapters 20 gleicht der Außenform der SD-Karte 17. An Außenrändem 22 und 23 des Adapters 20 sind den Stufungen der Außenränder 18,19 der SD-Karte 17 entsprechende Stufungen vorgesehen. Der Adapter 20 kann damit nur lagerichtig in den einen oder den anderen Schacht 4,5 eingeschoben werden, wobei die SIM-Karte lagerichtig dem für sie vorgesehenen Leser 11 zugeordnet ist.

Der Nutzer kann, wenn er die SIM-Karte verwenden will, diese - in den Adapter 20 eingesetzt - wahlweise in den linken Schacht 4 oder den rechten Schacht 5 einschieben. In den anderen Schacht kann der Nutzer dann die SD-Karte einschieben. Der Nutzer muss also nicht darauf achten, dass er die SIM-Karte und die SD-Karte in den richtigen Schacht einschiebt. Beide Schächte 4,5 sind sowohl zur Aufnahme einer SD-Karte als auch zur Aufnahme einer SIM-Karte im Adapter 20 geeignet.

## Patentansprüche

1. Lesegerät für Kartentypen unterschiedlicher Baugröße,
**dadurch gekennzeichnet,**
**dass** wenigstens zwei gleiche Schächte (4,5) zur Aufnahme der Kartentypen vorgesehen sind, wobei die Schächte (4,5) an den Kartentyp größerer Baugröße angepasst sind,
bei jedem der Schächte (4,5) Kontaktelemente (11,12) für den einen und den anderen Kartentyp so angeordnet sind, dass Kartentypen Kleinerer Baugröße mittels eines Adapters (20) eingeführt werden können
dessen Außenmaße dem Kartentyp größerer Baugröße entsprechen und welcher eine Aussparung (21) aufweist, die an die Maße des Kartentyps kleinerer Baugröße angepasst ist,
wobei die Kontaktelemente (11,12) für die unterschiedlichen Kartentypen in parallelen Leiterplattenebenen angeordnet sind und für die Kontaktelemente (12) für den einen Kartentyp eine durchgehende erste Leiterplatte (13) vorgesehen ist und die anderen Kontaktelemente (11) anwelteren zur ersten Leiterplatte (13) parallelen Leiterplatten (15) angeordnet sind, wobei diese weiteren Leiterplatten (15) mit der ersten Leiterplatte (13) kontaktiert sind.

2. Lesegerät nach Anspruch 1,
**dadurch gekennzeichnet,**
**dass** die Karte größerer Baugröße eine SD-Karte (17) ist und dass die Karte kleinerer Baugröße eine SIM-Karte ist.

3. Lesegerät nach Anspruch 1 oder 2,
**dadurch gekennzeichnet,**
**dass** den Schächten (4,5) gleich große Schlitze (6,7) einer Blendleiste (3) zugeordnet sind.

4. Lesegerät nach einem der vorhergehenden Ansprüche,
**dadurch gekennzeichnet,**
**dass** die Schächte (4,5) derart gestaltet sind, dass eine Verriegelung und Entriegelung der Karte (17) größerer Baugröße und des die Karte kleinerer Baugröße tragenden Adapters (20) durch eine Druck/Druck-Funktion erfolgt.

5. Lesegerät nach einem der vorhergehenden Ansprüche,
**dadurch gekennzeichnet,**
**dass** es eingerichtet ist für einen Kartentyp (17) größerer Baugröße und einen Adapter (20), welche an ihren zur Einschieberichtung parallelen Rändern (19,20; 22,23) ein gestuftes Profil aufweisen, dem eine Stufung (9',10') von Führungsrändern (9,10) der Schächte (4,5) angepasst ist.

6. Lesegerät nach einem der vorhergehenden Ansprüche,
**dadurch gekennzeichnet,**
**dass** bei den Schächten (4,5) die einen Kontaktelemente (12) für den einen Kartentyp an der einen Seite und die anderal Kontaktelemente (11) für den anderen Kartentyp an der gegenüberliegenden anderen Seite vorgesehen sind.

7. Lesegerät nach einem der vorhergehenden Ansprüche,
**dadurch gekennzeichnet,**
angepaßt an einen Adapter (20) der derart ausgebildet ist, dass die in ihn eingesetzte Karte kleinerer Baugröße den für sie vorgesehenen Kontakelementen (11) zugewandt ist.

8. Lesegerät nach Anspruch 1,
**dadurch gekennzeichnet,**
**dass** die Leiterplattenebenen von einem räumlich geformten Kunststoffteil gebildet sind, auf das Leiterbahnen für die Kontaktelemente (11, 12) aufgeprägt sind.

## Claims

1. Reading device for card types of differing size,
**characterised in**
**that** at least two identical slots (4, 5) for receiving the card types are provided, wherein the slots (4, 5) are adapted to the card type of a larger size, contact elements (11, 12) for the one and the other card type are disposed at each of the slots (4, 5) such that card types of a smaller size can be introduced by means of an adapter (20), the external dimensions of which correspond to the card type of a larger size and which has a recess (21) which is adapted to the dimensions of the card type of a smaller size,
wherein the contact elements (11, 12) for the differing card types are disposed in parallel printed circuit board planes, and a continuous first printed circuit board (13) is provided for the contact elements (12) for the one card type and the other contact elements (11) are disposed at further printed circuit boards (15) which are parallel to the first printed circuit board (13), wherein these further printed circuit boards (15) are contacted by the first printed circuit board (13).

2. Reading device according to Claim 1,
**characterised in**
**that** the card of a larger size is a SD card (17), and that the card of a smaller size is a SIM card.

3. Reading device according to Claim 1 or 2,
**characterised in**
**that** identically sized slits (6, 7) of a trim strip (3) are associated with the slots (4, 5).

4. Reading device according to any one of the preceding Claims,
**characterised in**
**that** the slots (4, 5) are formed such that the card (17) of a larger size and the adapter (20) bearing the card of a smaller size are locked and unlocked by a push/push function.

5. Reading device according to any one of the preceding Claims,
**characterised in**
**that** it is set up for a card type (17) of a larger size and an adapter (20) which has a stepped profile at its edges (19, 20; 22, 23) which are parallel to the push-in direction, to which profile a step (9', 10') of guide edges (9, 10) of the slots (4, 5) is adapted.

6. Reading device according to any one of the preceding Claims,
**characterised in**
**that** the one contact elements (12) for the one card type are provided at one side and the other contact elements (11) for the other card type are provided at the opposite other side of the slots (4, 5).

7. Reading device according to any one of the preceding Claims,
**characterised in**
adapted to an adapter (20) which is formed such that the card of a smaller size which is inserted therein faces the contact elements (11) which are provided for it.

8. Reading device according to Claim 1,
**characterised in**
**that** the printed circuit board planes are formed by a three-dimensionally moulded plastics part onto which conductor tracks for the contact elements (11, 12) are imprinted.

## Revendications

1. Lecteur pour types de cartes de différentes tailles, **caractérisé en ce que**
au moins deux fentes semblables (4, 5) sont prévues pour la réception des types de cartes, où les fentes (4, 5) sont adaptées au type de cartes de plus grande taille,
pour chacune des fentes (4, 5) des éléments de contact (11, 12) sont disposés pour l'un ou l'autre type de carte de sorte que les types de cartes de taille plus petite peuvent être insérés au moyen d'un adaptateur (20), dont les dimensions externes correspondent au type de carte de plus grande taille et qui présente un évidement (21), qui est adapté à la dimension du type de carte de plus petite taille,
dans lequel les éléments de contact (11, 12) sont disposés pour les différents types de cartes sur des cartes de circuit imprimé parallèles et pour les éléments de contact (12) pour un type de carte est prévu un premier circuit imprimé continu (13) et les autres éléments de contact (11) sont disposés sur d'autres circuits imprimés parallèles au premier circuit imprimé (13), où ces autres circuits imprimés (15) sont en contact avec le premier circuit imprimé (13).

2. Lecteur selon la revendication 1, **caractérisé en ce que** la carte de plus grande taille est une carte SD (17) et **en ce que** la carte de plus petite taille est une carte SIM.

3. Lecteur selon la revendication 1 ou 2, **caractérisé en ce qu'**aux fentes (4, 5) sont associés des orifices (6, 7) de même taille d'une baguette (3).

4. Lecteur selon l'une des revendications précédentes, **caractérisé en ce que** les fentes (4, 5) sont réalisées de sorte qu'un verrouillage et déverrouillage de la carte (17) de la plus grande taille et de l'adaptateur (20) portant la carte de plus petite taille s'effectuent par une fonction pousser-pousser.

5. Lecteur selon l'une des revendications précédentes, **caractérisé en ce qu'**il est agencé pour un type de carte (17) de la plus grande taille et pour un adaptateur (20), qui présentent un profil étagé sur leurs bords (19, 20; 22, 23) parallèles à la direction d'insertion, auquel est adapté une gradation (9', 10') des bords de guidage (9, 10) des fentes (4, 5).

6. Lecteur selon l'une de revendications précédentes, **caractérisé en ce que**, dans le cas des fentes (4, 5), les éléments de contact (12) pour un type de carte sont prévus sur un côté et les autres éléments de contact (11) pour l'autre type de carte sont prévus sur l'autre côté en vis-à-vis.

7. Lecteur selon l'une des revendications précédentes, **caractérisé en ce qu'**il est adapté à un adaptateur (20), qui est réalisé de sorte que la carte de plus petite taille insérée à l'intérieur est tournée vers les éléments de contact (11) prévus pour elle.

8. Lecteur selon la revendication 1, **caractérisé en ce que** les cartes de circuits imprimés sont réalisés par une partie en plastique formée spatialement, sur laquelle des pistes conductrices pour les éléments de contact (11, 12) sont gravées.
